# EUROPÄISCHE PATENTSCHRIFT

(11) **EP 2 110 224 B1**
(45) Veröffentlichungstag und Bekanntmachung des Hinweises auf die Patenterteilung: **11.06.2014**
(21) Anmeldenummer: 09156679.4
(22) Anmeldetag: 30.03.2009
(51) Int. Cl.: B29C 49/64, B29C 35/08, B29C 49/06, B29C 49/78, B29C 49/80, B29B 11/08, B29B 11/12, B29B 11/14

(54) **Verfahren und Vorrichtung zur Herstellung von Kunststoffbehältnissen mit Infrarot-Absorptionsüberwachung**
Method and device for the manufacture of plastic containers with infrared absorption monitoring
Procédé et dispositif de fabrication de récipients en plastique avec surveillance de l'absorption par infrarouges

(30) Priorität: 17.04.2008 DE 102008019176; 22.08.2008 DE 102008039375
(43) Veröffentlichungstag der Anmeldung: 21.10.2009
(73) Patentinhaber: Krones AG, 93073 Neutraubling (DE)
(72) Erfinder: Forsthövel, Jochen, 93055 Regensburg (DE); Fiegler, Rudolf, 93053 Regensburg (DE); Lappe, Ulrich, 93059 Regensburg (DE)
(74) Vertreter: Grünecker, Kinkeldey, Stockmair & Schwanhäusser

(56) Entgegenhaltungen:
- EP-A1- 2 011 617
- WO-A1-03/002922
- WO-A1-2004/104080
- WO-A1-2005/095516
- WO-A2-2004/066078
- WO-A2-2006/060690

## Beschreibung

Die vorliegende Erfindung bezieht sich auf eine Vorrichtung und ein Verfahren zum Herstellen von Kunststoffbehältnissen. Die Erfindung betrifft insbesondere ein Verfahren zum Herstellten von Kunststoffbehältnissen mittels Vorformlingen aus Kunststoffmaterial und eine Vorrichtung zum Herstellen einer Vielzahl von Kunststtoffbehältnissen mittels Vorformlingen aus Kunststoffmaterial. Aus dem Stand der Technik sind derartige Vorrichtungen und Verfahren bekannt. Dabei werden zunächst mit Hilfe einer Spritzgießmaschine Kunststoff-Vorformlinge erzeugt. Diese Kunststoff-Vorformlinge weisen üblicherweise einen Grundkörper sowie ein an diesem Grundkörper angeordnetes Gewinde auf. Dieses Gewinde liegt dabei üblicherweise bereits in seiner endgültigen Form vor. Der Grundkörper hingegen wird durch einen Expansionsvorgang zu dem zu erzeugenden Kunststoffbehältnis expandiert. Dabei ist es üblich, dass die Kunststoff-Vorformlinge vor dem eigentlichen Expansionsvorgang mit einer Heizeinrichtung erwärmt werden.

In jüngerer Zeit ist man dazu übergegangen, den Kunststoff für die Bildung der Vorformlinge aus recyceltem Material herzustellen oder recyceltes Material zu verwenden. Ein Problem bei der Verwendung von Recycling - Resins besteht darin, dass der Streck-Blas-Produktionsbetrieb einen höheren Aufwand bei der Maschinenbedienung betreiben muss, da es Chargenschwankungen gibt. Mit anderen Worten ist das Kunststoffmaterial zur Herstellung von Vorformlingen nicht exakt einheitlich und damit sind auch die daraus gebildeten Kunststoff-Vorformlinge nicht exakt einheitlich. Derartige Chargenschwankungen rühren aus den unterschiedlichen beim Recycling verwendeten Rohstoffen, auf die auch der Recyklat-Hersteller keinen Einfluss hat.

Durch diese unterschiedlichen Mischungen kommt es zu unterschiedlichem und damit auch schwankendem Verhalten der Vorformlinge (Preforms) bei der Wärmeaufnahme.

Diese Schwankungen führen wiederum zu Schwankungen der erreichten Preform-Temperatur in der Aufheizstrecke der Blasmaschine und führen daher letztlich zu mehr Bedienereingriffen, wobei sehr gut geschultes Personal notwendig ist. Auch kann der Verlust ganzer Chargen auftreten, da diese zu ungleichmäßig geformt werden, beispielsweise weil sie sich nicht genügend erwärmt haben.

Aus der WO 2006/060690 ist ein System zum Einbringen von ausgewählter thermischer Infrarotstrahlung in Artikel bekannt.

Aus der WO 2005/095516 ist ein Polymerzusatz zum Verbessern der Aufwärmeigenschaften eines Polymers bekannt.

Der vorliegenden Erfindung liegt daher die Aufgabe zugrunde, derartige Ungleichmäßigkeiten zu erkennen und gegebenenfalls auf diese Ungleichmäßigkeiten zu reagieren. Dies wird erfindungsgemäß durch ein Verfahren und eine Vorrichtung gemäß der unabhängigen Ansprüche 1 und 10 erreicht. Vorteilhafte Ausführungsformen und Weiterbildungen sind Gegenstand der Unteransprüche.

Es ist von Vorteil, wenn die Vorformlinge in einem Spritzguss- oder Schmelzkompressionsvorgang hergestellt werden, da dann unter Hinzunahme bekannter Verfahrensteilschritte und Vorrichtungen kostengünstig ein belastbares Kunststoffbehältnis erreichbar ist.

Es ist von Vorteil, wenn der Infrarot-Absorptionsgrad an den aus dem Kunststoffmaterial gefertigten Vorformlingen bestimmt wird. Einerseits wird zu einem sehr frühen Fertigungszeitpunkt bereits ein charakteristischer Wert bestimmbar und während des nachfolgenden Prozesses für lange Zeit nutzbar und andererseits wird an dem gefertigten Vorformling der charakteristische Wert nutzbar, um während eines nachfolgenden Heizens und/oder Expandierens auf den dabei ablaufenden Prozess einwirken zu können.

Wenn die Vorformlinge mittels einer Heizeinrichtung erwärmt werden und die erwärmten Vorformlinge zu Kunststoffbehältnissen expandiert werden, so kann auf bekannte Materialien zurückgegriffen werden, insbesondere Polyethylenterephthalat (PET).

Es hat sich als vorteilhaft herausgestellt, wenn der Infrarot-Absorptionsgrad während oder vor dem Expansionsschritt ermittelt wird, um noch rechtzeitig auf die Kreation des Kunststoffbehältnisses Einfluss nehmen zu können.

Es ist auch von Vorteil, wenn der charakteristische Wert eine Erwärmung der Vorformlinge beeinflusst, insbesondere regelt oder steuert, da dann ein Vorformling abhängig von seinem durch das Material bestimmten Infrarot-Absorptionsgrad angepasst und für ihn optimiert bearbeitet werden kann.

Um den Ausschuss an qualitativ minderwertigen Kunststoffbehältern zu minimieren, ist es von Vorteil, wenn der charakteristische Wert nach Herstellung der Vorformlinge ein Sortieren der Vorformlinge in eine Gruppe von Vorformlingen mit ähnlichem Infrarot-Absorptionsgrad hervorruft oder ein Aussortieren zumindest eines Vorformlings bedingt.

Um jeden Vorformling unabhängig von dem vorhergehend bearbeiteten oder nachfolgend bearbeiteten Vorformling bearbeiten zu können, ist es von Vorteil, wenn der charakteristische Wert ein individuelles Erwärmen jedes Vorformlings regelt oder steuert.

Es ist ferner von Vorteil, wenn der ermittelte charakteristische Wert mit einem abgespeicherten Wert zur Beeinflussung des Verfahrens verglichen wird, da so auf bekannte Materialeigenschaften in Abhängigkeit von dem ermittelten Infrarot-Absorptionsgrad eingegangen werden kann.

Als vorteilhaft für eine Vorrichtung hat sich herausgestellt, wenn durch die Infrarot-Absorptionsuntersuchungseinrichtung mittels Nutzung von Durchlicht und/oder ortsaufgelöst arbeitend der Infrarot-Absorptionsgrad eines Vorformlings bestimmbar ist. Einerseits ist eine exakte Aussage über den Infrarot-Absorptionsgrad treffbar und andererseits durch Bestimmung des Infrarot-Absorptionsgrades an unterschiedlichen Orten des Kunststoffs eine verlässlichere Aussage über die Qualität des Kunststoffes treffbar.

Als vorteilhaft hat es sich auch herausgestellt, wenn die Infrarot-Absorptionsuntersuchungseinrichtung zur Ausstrahlung von Licht im Wellenlängebereich von 800 nm bis 1200 nm und 1200 nm bis 1500 nm und/oder 2000 nm bis 3000 nm und 3000 nm bis 7000 nm ausgebildet ist, insbesondere zur Ausstrahlung von Infrarotlicht. Auf diese Weise ist mit einfachen Vorrichtungen der Infrarot-Absorptionsgrad bestimmbar und bei Nutzung des Lichts im Wellenlängenbereich von 2000 bis 7000 nm auch der sogenannte "Wassergehalt" bestimmbar.

Für einen auf der Vorrichtung ablaufenden Prozess hat es sich als vorteilhaft herausgestellt, wenn eine Erwärmungseinheit und eine stromabwärts davon angeordnete Expandierungsvorrichtung zum Fertigen der Kunststoffbehältnisse aus den Vorformlingen enthalten ist.

Um bei jedem Vorformling auf seine unterschiedliche Infrarotlicht absorbierende Materialeigenschaften eingehen zu können, ist es von Vorteil, wenn die Erwärmungseinheit durch den ermittelten Infrarot-Absorptionsgrad individuell bezüglich ihrer Heizleistung beeinflussbare, insbesondere steuerbare Heizeinrichtungen aufweist.

Bei dem erfindungsgemäßen Verfahren zum Herstellen von Kunststoffbehältnissen werden Kunststoff-Vorformlinge durch einen Spritzgussvorgang oder einen Schmelze-Kompressionsvorgang aus einem Kunststoffmaterial hergestellt. Erfindungsgemäß wird ein Infrarot-Absorptionsgrad wenigstens eines Bereichs des Kunststoffmaterials bestimmt und wenigstens ein für diesen Infrarot-Absorptionsgrad charakteristischer Wert für das Kunststoffmaterial ausgegeben.

Wie oben erwähnt, kommt es auf Grund der schwankenden Kunststoffe ebenfalls zu schwankender Wärmeaufnahme in einem PET-Vorformling. Diese wiederum ist zurückzuführen auf ein unterschiedliches Infrarot- (IR) Absorptionsverhalten. Die Ursache hierfür ist, dass von den Rohstoffherstellern unterschiedliche Anteile an Infrarotabsorbermaterial verwendet wurden. Durch die vorliegende Erfindung ist eine Kontrolle des Infrarot-Absorptionsgrades und des Infrarot-Absorptionsverhaltens möglich, um auf diese Weise die Herstellung des Kunststoffbehältnisses bzw. auch der Kunststoff-Vorformlinge zu beeinflussen. Vorzugsweise wird dabei der Infrarot-Absorptionsgrad wenigstens eines Kunststoff-Vorformlings nach dessen Herstellung bestimmt.

Dabei wird darauf hingewiesen, dass das Infrarot-Absorptionsverhalten zerstörungsfrei gemessen werden kann. Bevorzugt wird zu diesem Zweck ein Infrarot-Absorptionsspektrometer verwendet, welches eine PET-Probe im Prinzip durchleuchtet und das ankommende Infrarotspektrum auswertet.

Erfindungsgemäß wird bei der Herstellung der Kunststoff-Vorformlinge dem Kunststoffmaterial Infrarot-Absorptionsmaterial beigefügt. Dies bedeutet, dass bei der Herstellung der Kunststoff mit einem Material angereichert wird, das insbesondere zur Absorption von infraroter Strahlung bzw. Wärmestrahlung geeignet ist. Dabei kann es sich beispielsweise um Rußpartikel oder dergleichen handeln. Dabei wird die Menge des beigefügten Absorptionsmaterials in Abhängigkeit von dem für den Infrarot-Absorptionsgrad charakteristischen Wert geregelt oder gesteuert.

So ist es beispielsweise möglich, dass in Antwort auf ein Messsignal, welches einen zu niedrigen Infrarot-Absorptionswert anzeigt, die Anreicherung mit dem Infrarot-Absorptionsmaterial erhöht wird. Durch diese Anreicherung wiederum wird der Absorptionskoeffizent der Behältnisse erhöht und damit deren Erwärmung durch Wärmestrahlung verbessert. Vorteilhaft wird eine Pumpe, welche dem Kunststoffmaterial das Infrarot-Absorptionsmaterial zuführt, in Abhängigkeit von dem gemessenen Infrarot-Absorptionsgrad geregelt.

Vorzugsweise wird die oben erwähnte Messung bereits bei der Herstellung der Vorformlinge angewandt und damit ist eine Vorsortierung verschiedener Absorptionsgüter möglich. So wäre es möglich, später unterschiedliche Sorten an Vorformlingen dem Blasvorgang zuzuordnen, wobei diese unterschiedlichen Sorten an Vorformlingen auf unterschiedliche Weise erwärmt werden um auf diese Weise das unterschiedliche Infrarot-Absorptionsverhalten auszugleichen. Falls jeweils eine gleiche Absorptionsklasse verwendet wird, können auf diese Weise die oben beschriebenen Schwankungen minimiert werden.

So ist es beispielsweise möglich, in einer Nachkühlstation einer Spritzgießmaschine eine Vorrichtung zur Messung des Infrarot-Absorptionsgrades einzubauen. Diese Messvorrichtung ermittelt beispielsweise an Hand eines Vorformlings pro Charge bzw. Schuss die Infrarot-Absorption und vergleicht diese mit einer hinterlegten Datenbank. Hierüber wird die Infrarot-Absorptionsklasse des geprüften Vorformlings ermittelt. Der ganze Schuss bzw. die gesamte Charge wird über eine Weiche in eine einer Absorptionsklasse entsprechenden Box bzw. ein entsprechendes Behältnis geleitet. Damit werden die hier bevorzugt hergestellten Kunststoff-Vorformlinge in Abhängigkeit von dem gemessenen Infrarot-Absorptionsgrad unterschiedlichen Gruppen von Kunststoff-Vorformlingen zugeordnet bzw. sortiert.

Die Beeinflussung der Menge des beim Spritzgießen beigefügten Absorptionsmaterials kann durch Rückmeldung aus einer online-Infrarot-Absorptionsmessung abgeleitet werden.

Die vorliegende Erfindung ist weiterhin auf ein Verfahren zur Herstellung von Kunststoffbehältnissen gerichtet, wobei die Kunststoff-Vorformlinge mit Hilfe einer Heizvorrichtung, durch die sie bevorzugt hindurch transportiert werden, erwärmt und anschließend die erwärmten Kunststoff-Vorformlinge zu Kunststoffbehältnissen expandiert werden. Erfindungsgemäß wird ein Infrarot-Absorptionsgrad wenigstens eines Bereichs der Kunststoff-Vorformlinge bestimmt und wenigstens ein für diesen Infrarot-Absorptionsgrad charakteristischer Wert für das Material ausgegeben.

Damit wird auch bei dieser erfindungsgemäßen Vorgehensweise ein Infrarot-Absorptionsgrad bestimmt, dieser Infrarot-Absorptionsgrad wird jedoch in denjenigen Verfahrensschritten bestimmt, in denen der Vorformling zu einem Kunststoffbehältnis expandiert wird. Dabei wird darauf hingewiesen, dass die Herstellung der Kunststoff-Vorformlinge und das Formen der Kunststoffbehältnisse aus den Kunststoff-Vorformlingen üblicherweise nicht von den gleichen Maschinen vorgenommen werden, sondern teilweise in völlig unterschiedlichen zeitlichen Abschnitten und sogar an unterschiedlichen Orten durchgeführt werden.

Vorzugsweise wird der Infrarot-Absorptionsgrad mit Hilfe eines Durchlichtverfahrens bestimmt. Dieses Verfahren eignet sich besonders, da es den zu untersuchenden Vorformling nicht zerstört. Bevorzugt wird dabei zur Bestimmung des Infrarot-Absorptionsverhaltens die Transmission des Behältnisses für auf das Behältnis eingestrahlte Infrarotstrahlung bestimmt.

Bei einem weiteren bevorzugten Verfahren wäre es auch möglich, die durch die Behältnisse hindurch tretende Infrarot-Strahlung ortsaufgelöst zu bestimmen, um so eine Aussage über eine Gleichmäßigkeit der Materialverteilung treffen zu können.

Bei diesem erfindungsgemäßen Verfahren wird damit die Messung vorzugsweise vor einer Blasmaschine vorgenommen und besonders bevorzugt laufen die Vorformlinge in eine Heizstrecke bzw. einen Ofen.

Vorzugsweise wird zur Bestimmung des Infrarot-Absorptionsgrades Licht in einem Wellenlängenbereich zwischen 800 und 1500 nm verwendet. Durch Verwendung von Licht in diesen Wellenlängebereich kann in besonderer günstiger Weise das Infrarot-Absorptionsverhalten untersucht werden. Dabei ist es möglich, eine Strahlungseinrichtung vorzusehen, welche beispielsweise Licht in einem Wellenlängenbereich von 1200 nm aussendet, um auf diese Weise den Infrarot-Absorptionsgrad zu messen. Es wäre jedoch auch möglich, ein Wellenlängenspektrum beispielsweise zwischen 800 nm und 1500 nm bei der Beurteilung des Absorptionsgrades abzufahren.

Bei einer weiteren vorteilhaften Ausführungsform werden für den Infrarot-Absorptionsgrad charakteristische Werte mit in einer Speichereinrichtung gespeicherten Werten verglichen. Auf diese Weise kann an Hand dieses Vergleichs überprüft werden, ob ein gemessener Absorptionsgrad von einem Sollwert abweicht, um auf diese Weise entsprechend in das Verfahren eingreifen zu können, beispielsweise, um das entsprechende Behältnis aus dem Herstellungsprozess aussondern zu können.

Vorzugsweise werden die Kunststoff-Vorformlinge erwärmt und anschließend zu Kunststoffbehältnissen expandiert und der Infrarot-Absorptionsgrad wird vor der Erwärmung der Kunststoff-Vorformlinge bestimmt.

Vorteilhaft werden Kunststoff-Vorformlinge in Abhängigkeit von einem bestimmten Absorptionsgrad ausgesondert. Falls beispielsweise die Infrarot-Absorptionsmessungen zu dem Ergebnis kommen, dass der Absorptionsgrad der Vorformlinge zu niedrig ist, können diese noch vor dem eigentlichen Heizvorgang ausgesondert werden und beispielsweise einer anderen Sorte an Vorformlingen zugeordnet werden. Auf diese Weise kann ein unnötiger Energieverlust bzw. Verlust von Vorformlingen im Produktionsprozess vermieden werden.

Bei dieser Variante wird vorzugsweise jeder einzelne Vorformling hinsichtlich seines Absorptionsverhaltens untersucht. Bei dem oben beschriebenen Verfahren genügt es, jeweils einen Vorformling aus einer Charge bzw. einem Schuss zu untersuchen, um eine Aussage über den gesamten Schuss treffen zu können, da üblicherweise die Materialzusammensetzung innerhalb eines Schusses als annähernd konstant angenommen werden kann. Jedoch könnten auch mehrere Behältnisse aus einem Schuss untersucht werden, um durch geeignete statistische Maßnahmen eine genauere Aussage über die Materialzusammensetzung des betreffenden Schusses zu erhalten.

Bei einem weiteren vorteilhaften Verfahren wird mit Hilfe einer Infrarot-Absorptionsmessung ein Wassergehalt der Vorformlinge bestimmt. Damit ist es möglich, zusätzlich eine Messung über den Wassergehalt in dem Vorformling durch eine zusätzliche Analyse des "Wasserbandes" bzw. die dortige Absorption durchzuführen. Der Wassergehalt ist eine wichtige Kerngröße für die Verarbeitung von PET und mit herkömmlichen Methoden nur sehr aufwändig zu bestimmen. So wäre es beispielsweise möglich, eine zusätzliche Strahlungseinrichtung vorzusehen, welche in dem für Wasser typischen Absorptionsbereich strahlt, beispielsweise einem Wellenlängenbereich zwischen 2000nm und 7000nm und bevorzugt einem Bereich zwischen 2000nm und 3000nm. Diese Messung des Wassergehalts könnte in die oben erwähnte Infrarot-Absorptionsmessung einfach integriert werden, indem eine zusätzliche Strahlungseinrichtung vorgesehen wird, die in dem Bereich der Wasserabsorption ausstrahlt.

Gemäß einer bevorzugten Ausführungsform können die erfindungsgemäßen Verfahren einen Schritt zum Erwärmen der Kunststoff-Vorformlinge umfassen, wobei der ausgegebene charakteristische Wert zum Steuern des Erwärmungsschrittes verwendet wird. Dadurch können die bzgl. der Infrarot-Absorptionsfähigkeit festgestellten Eigenschaften des Kunststoffmaterials bzw. der Kunststoff-Vorformlinge direkt während dem Aufheizen vor der Expansion berücksichtigt werden. Somit können Schwankungen in der Materialzusammensetzung wirksam berücksichtigt werden. Dabei ist es denkbar, dass der Erwärmungsschritt individuell an jeden einzelnen vermessenen Vorformling angepasst wird, oder aber der Erwärmungsschritt jeweils an eine Klasse Vorformlinge angepasst wird. Weiterhin kann bei diesem Verfahren der charakteristische Wert an der Blasmaschine selbst oder in einer eigenen Vorrichtung bestimmt werden.

Vorteilhafterweise kann zum Erwärmen der Kunststoff-Vorformlinge den Kunststoff-Vorformlingen jeweils eine eigene Heizeinrichtung, insbesondere eine Mikrowellen-und/oder Infrarotheizung, zum individuellen Erwärmen zugeordnet werden. Während in bekannten Blasmaschinen die Vorformlinge eine Heizkammer durchlaufen, wird es durch die Bereitstellung individueller Heizeinrichtungen ermöglicht, die Heizleistung der jeweiligen Heizeinrichtung an den charakteristischen Wert des sich jeweils in der Heizeinrichtung befindlichen Vorformlings anzupassen.

Bei dieser Ausführungsform kann es vorteilhaft sein, wenn die Bestimmung des charakteristischen Werts unmittelbar vor dem Eintritt in die Heizeinrichtung stattfindet, um somit eine eindeutige Zuordnung zwischen Vorformling und Absorptionsverhalten zu ermöglichen. Allerdings ist es gemäß einer Alternative auch möglich die Vorformlinge vor dem Eintritt in die Heizeinrichtung zu identifizieren, beispielsweise über einen Barcode oder RFID Chip, und mit in einer Datenbank abgelegten charakteristischen Werten abzugleichen.

Es wird außerdem eine Vorrichtung zum Herstellen von Kunststoffbehältnissen mit einer Spritzgussvorrichtung bereitgestellt, welche aus einem Kunststoffmaterial Kunststoff-Vorformlinge erzeugt. Dabei weist die Vorrichtung eine Infrarot-Absorptionsuntersuchungseinrichtung auf, welche einen Infrarot-Absorptionsgrad wenigstens eines Teils des Kunststoffmaterials bestimmt. Damit wird auch durch die Vorrichtung eine Möglichkeit geschaffen, um Vorformlinge, die ungünstig von Sollwerten abweichen, erkennen zu können.

Vorzugsweise ist die Absorptionsuntersuchungseinrichtung stromabwärts bezüglich der Spritzgießvorrichtung angeordnet und bestimmt einen Infrarot-Absorptionsgrad wenigstens eines Teils des hergestellten Kunststoff-Vorformlings. Damit ist es auch bei dieser Ausführungsform möglich, bestimmte Vorformlinge auszusondern bzw. unterschiedlichen Klassen zuzuordnen.

Bei einer weiteren vorteilhaften Ausführungsform weist die Absorptionsuntersuchungseinrichtung eine Strahlungseinrichtung auf, welches Licht in einem infraroten Wellenlängenbereich auf die Kunststoffbehältnisse einstrahlt. Durch diese Vorgehensweise kann eine zerstörungsfreie Untersuchung des Infrarot-Absorptionsgrades vorgenommen werden. Vorteilhaft können auch eine Vielzahl von Strahlungseinrichtungen vorgesehen sein, welche Licht in Infrarotwellenlängenbereichen auf die Kunststoffbehältnisse einstrahlen. Auf diese Weise ist es möglich, den Vorformling an mehreren Stellen zu untersuchen, um auf diese Weise den Infrarot-Absorptionsgrad auch statistisch auszuwerten und um zu verhindern, dass möglicherweise ein Bereich mit einem besonders hohen Infrarot-Absorptionsgrad die Messung verfälscht.

Bei einer weiteren vorteilhaften Ausführungsform weist die Absorptionsuntersuchungseinrichtung eine Strahlungsdetektoreinrichtung auf, welche auf die Kunststoffbehältnisse eingestrahltes und von diesen transmittiertes Licht erfasst. Grundsätzlich könnte eine Messung mit einem Spektroskop durchgeführt werden. Spektroskope sind jedoch relativ aufwendig.

Daher ist es beispielsweise möglich, zwei oder drei Dioden als Strahlungseinrichtungen zu verwenden, wobei diese zwei oder drei Dioden ein definiertes Spektrum aufweisen sowie jeweils einen diesen Bereich geeigneten Empfänger. Auf diese Weise ist es möglich, das Problem der sogenannten Lampenalterung der üblichen Spektrometer zu verhindern. Daneben ist die Lösung, bei der lediglich zwei oder drei Dioden vorgesehen werden, preisgünstiger und schneller. Derartige Infrarotdioden altern im Wesentlichen nicht und halten damit lange und strahlen einen klar definierten engen Spektrumsbereich aus.

Vorzugsweise ist die Strahlungsdetektoreinrichtung bezüglich der zu untersuchenden Vorformlinge gegenüber der Strahlungseinrichtung angeordnet, um das durch den Vorformling transmittierte Licht zu detektieren und zu analysieren.

Weiterhin weist bevorzugt die Absorptionsuntersuchungseinrichtung eine weitere Strahlungseinrichtung auf, welche Strahlung in einem Wellenlängenbereich zwischen 2000nm und 3000nm abgibt. Diese weitere Strahlungseinrichtung dient insbesondere zur Untersuchung von Wassereinschlüssen bzw. einem Wassergehalt in den hergestellten Vorformlingen. Vorzugsweise sind auch mehrere derartiger weiterer Strahlungseinrichtungen vorgesehen, welche an mehreren Bereichen des Vorformlings den Wassergehalt untersuchen. Auch durch diese Vorgehensweise ist es möglich, Messfehler durch lokale Maxima an Wassergehalt zu vermeiden.

Es wird außerdem eine Vorrichtung zum Herstellen von Kunststoffbehältnissen bereit gestellt, wobei diese Vorrichtung eine Erwärmungseinheit aufweist, welche Kunststoff-Vorformlinge erwärmt sowie eines sich an diese Erwärmungseinheit anschließende Expandierungsvorrichtung, welche die erwärmten von Kunststoff-Vorformlinge zu Kunststoffbehältnissen expandiert. Dabei weist die Vorrichtung eine Absorptions-Untersuchungseinrichtung auf, welche einen Infrarot-Absorptionsgrad wenigstens eines Teils des Kunststoff-Vorformlings bestimmt. Vorzugsweise ist die Vorrichtung in der oben beschriebenen Art ausgestaltet. Vorzugsweise ist die AbsorptionsUntersuchungseinrichtung stromaufwärts bezüglich der Erwärmungseinrichtung angeordnet. Bei einer weiteren vorteilhaften Ausführungsform ist eine Transporteinrichtung vorgesehen, welche die Behältnisse durch die Erwärmungseinheit hindurchbefördert bzw. an Heizelementen vorbeibefördert.

Bereitgestellt wird ferner eine Vorrichtung zum Herstellen von Kunststoffbehältnissen, insbesondere wie oben beschrieben, mit einer Erwärmungseinheit, welche Kunststoff-Vorformlinge erwärmt sowie einer sich an die Erwärmungseinheit anschließenden Expandierungsvorrichtung, welche die erwärmten Kunststoff-Vorformlinge zu Kunststoffbehältnissen expandiert. Diese Vorrichtung ist gekennzeichnet durch eine Einheit zum Steuern der Erwärmungseinheit, die so ausgebildet ist, dass zum Steuern der Erwärmung der Kunststoff-Vorformlinge ein für den Infrarot-Absorptionsgrad der einzelnen Kunststoff-Vorformlinge charakteristischer Wert verwendet wird. Somit kann beim Steuern bzw. Regeln der Erwärmungseinheit auf die IR-Absorptionsfähigkeit des Materials Rücksicht genommen werden. Zum Steuern wird dabei bevorzugt der für jeden einzelnen Vorformling bestimmte charakteristische Wert verwendet. Es ist aber auch möglich einen für eine Gruppe festgestellten, beispielsweise gemittelten Wert zu verwenden.

Gemäß einer bevorzugten Ausführungsform kann die Erwärmungseinheit mehrere individuell steuerbare Heinzeinrichtungen, insbesondere Mikrowellen- und/oder IR-Heizungen, aufweisen, deren Heizleistung individuell einstellbar ist. Dadurch wird es ermöglicht Materialschwankungen zu berücksichtigen, um Schwankungen im Endprodukt zu reduzieren. Individuelle Heizeinrichtungen haben dabei den Vorteil, dass sie aufgrund ihres kleinen Volumens schnell an geänderte Parameter angepasst werden können. Dabei durchlaufen die Vorformlinge nicht mehr eine gemeinsame Heizeinrichtung sondern die individuellen Heizeinrichtungen können so ausgelegt sein, dass sie mit den Vorformlingen in der Blasmaschine mitfahren.

Vorteilhafterweise kann die Einheit zum Steuern so ausgebildet sein, dass die Heizleistung einer Heizeinrichtung basierend auf dem charakteristischen Wert des sich in der Heizeinrichtung befindlichen Vorformlings steuerbar ist. Hierdurch kann von Vorformling zu Vorformling auf sich ändernde Materialzusammensetzungen eingegangen werden.

Weitere Vorteile und Ausführungsformen ergeben sich aus den beigefügten Zeichnungen:

Darin zeigen:
- Fig. 1: eine erfindungsgemäße Vorrichtung zum Herstellen von Kunststoffbehältnissen;
- Fig. 2: eine aufgenommenes Infrarot-Absorptionsspektrum eines Behältnisses;
- Fig. 3: eine Veranschaulichung zur Anordnung einer Infrarot-Absorptionsuntersuchungseinrichtung,
- Fig. 4: eine weitere Ansichtung zur Veranschaulichung der Anordnung einer Infrarot-Absorptionsuntersuchungseinrichtung, und
- Fig. 5: eine weitere Ausführungsform einer erfindungsgemäßen Vorrichtung zum Herstellen von Kunststoffbehältnissen.

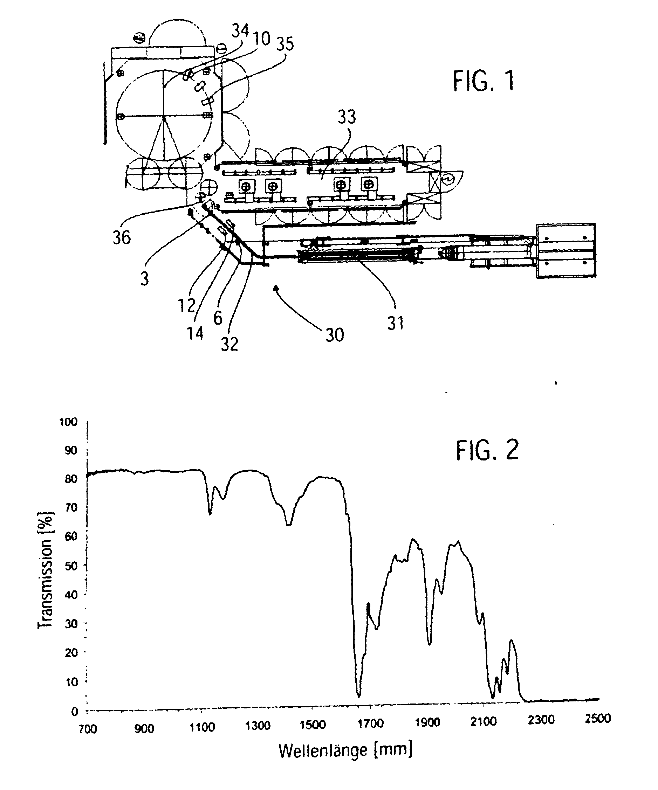

Fig. 1 zeigt eine erfindungsgemäße Vorrichtung 30 zum Herstellen von Behältnissen. Dabei ist eine Sortiereinrichtung 31 vorgesehen, welche die ankommenden Vorformlinge 10 in eine bestimmte Orientierung ausrichtet. Anschließend werden diese Vorformlinge 10 einer Transporteinrichtung 32 wie einer Rutsche zugeführt, entlang derer sie zu einem Eintaktstern 36 geführt werden. An diesen Eintaktstern 36 schließt sich eine Heizeinrichtung 33 an, durch welche hindurch die Behältnisse geführt werden, um anschließend in einer Blaseinrichtung 34 zu Kunststoffbehältnissen expandiert zu werden.

Diese Blaseinrichtung 34 weist dabei eine Vielzahl von Behandlungsstationen 35 auf, in denen die Vorformlinge 10 zu Behältnissen expandiert werden. Stromaufwärts bezüglich der Heizeinrichtung 33 ist eine Infrarot-Absorptionsuntersuchungseinrichtung vorgesehen, welche in ihrer Gesamtheit mit dem Bezugszeichen 6 gekennzeichnet ist.

Dabei weist bei dieser Ausführungsform diese Infrarot-Absorptionseinrichtung 6 eine Vielzahl von Strahlungseinrichtungen 11,12,13 auf, welche durch die Behältnisse 10 hindurch auf Sensoreinrichtungen bzw. Strahlungsdetektoreinrichtungen 14, 16, 18 einstrahlen. Diese Sensoreinrichtungen 14, 16, 18 messen damit die durch die Behältnisse hindurchgegangene Strahlung und bestimmen auf diese Weise einen Absorptionsgrad der einzelnen Behältnisse. Das Bezugszeichen 3 bezieht sich auf eine Ausschleuseeinrichtung, mit der einzelne Behältnisse aus der Vorrichtung ausgesondert werden können, beispielsweise Behältnisse, welche einen zu geringen Infrarot-Absorptionskoeffizienten aufweisen.

Es wäre auch möglich, die Ausschleuseeinrichtung 3 stromabwärts bezüglich der Heizeinrichtung 33 anzuordnen. Dabei ist es möglich, dass die Ausschleuseinrichtung an die Infrarot-Absorptionseinrichtung gekoppelt ist, um gezielt Behältnisse mit zu geringen Infrarot-Absorptionsgrad auszuschleusen.

Fig. 2 zeigt ein Beispiel für ein aufgenommenes Infrarot-Absorptionsspektrum eines untersuchten Behältnisses. Man erkennt hier, dass in einem Wellenlängenbereich zw. 700 und 1500 nm ein hoher Anteil der Infrarotleistung transmittiert wird. Beispielsweise wäre es möglich, das in Fig. 2 gezeigte Spektrum als Referenz abzuspeichern und mit aufgenommenen Infrarot-Absorptionsdaten zu vergleichen. Falls beispielsweise bestimmte Behältnisse eine wesentlich höhere Transmission aufweisen, lässt dies umgekehrt auf eine geringe Infrarot-Absorption schließen. In diesem Falle könnten die Behältnisse in eine andere Klasse von Behältnissen zugeordnet werden.

Auf diese Weise ist es, wie oben ausgeführt möglich, unterschiedliche Klassen oder Gruppen von Behältnissen zu bilden, wobei bei der Herstellung der Kunststoffbehältnisse die Heizeinrichtung 33 jeweils auf diese unterschiedlichen Klassen angepasst werden könnte und unterschiedliche Klassen an Behältnissen unterschiedlich behandelt bzw. unterschiedlich erwärmt werden. Auch wäre es möglich, die Parameter der Expansionsvorrichtung 34 auf die unterschiedlichen Klassen der Behältnisse anzupassen.

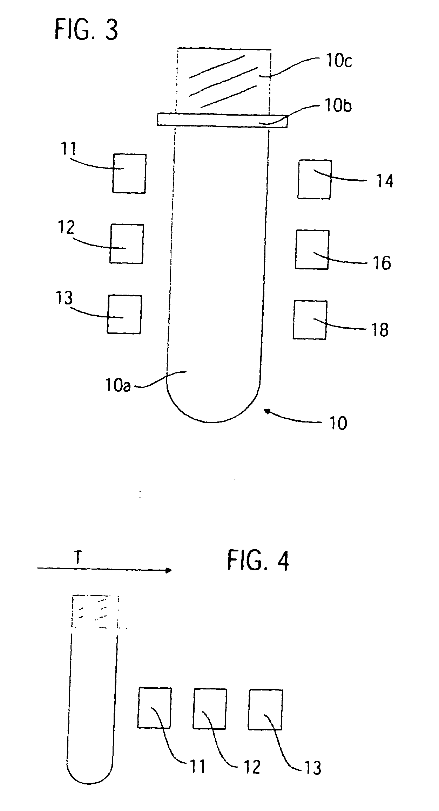

Fig. 3 zeigt eine schematische Darstellung zur Veranschaulichung einer Infrarot-Absorptionsmessung. Dabei sind hier übereinander drei Strahlungseinrichtungen 11,12,13 gezeigt, welche jeweils infrarotes Licht auf ein Behältnis 10 genauer gesagt einen Grundkörper 10a dieses Behältnisses 10 ausstrahlen. Dieses Licht wird zumindest teilweise von dem Behältnis transmittiert und gelangt auf Strahlungsdetektoreinrichtungen 14,16,18. Dabei sind die Sensorwellenlängen auf die Wellenlängen der Strahlungseinrichtungen 11,12,13 angepasst. Oberhalb eines Tragrings 10b, d.h. in Höhe eines Gewindes 10c, sind bevorzugt keine Infrarot-Absorptionsuntersuchungseinrichtungen vorgesehen, da in diesem Bereich keine Expansion der Behältnisse 10 stattfindet.

Die drei Strahlungseinrichtungen 11,12,13 können dabei unterschiedliche Wellenlängenbereiche ausstrahlen, beispielsweise die obere Strahlungseinrichtung eine Wellenlänge im Bereich von 800 nm, die mittlere Strahlungseinrichtung eine Wellenlänge im Bereich von 1200 nm und die dritte Strahlungseinrichtung eine Wellenlänge im Bereich von 2500 nm. Damit eignet sich die dritte Strahlungseinrichtung 13 insbesondere zum Feststellen eines Wassergehalts innerhalb des Vorformlings 10. Die Wellenlängen der dritten Strahlungseinrichtung könnten jedoch auch bedeutend höher liegen, etwa in einem Bereich zwischen 6000nm und 7000nm, um das Vorhandensein von Wasser zu untersuchen.

Fig. 4 zeigt eine weitere Ausführungsform einer erfindungsgemäßen Absorptionseinrichtung. Hier wird das in seiner Gesamtheit mit 10 bezeichnete Behältnis entlang der Transportrichtung T an drei Strahlungseinrichtungen 11,12,13 vorbeigeführt. Diese drei Strahlungseinrichtungen 11, 12, 13 sind in Fig. 4 vor dem Behältnis angeordnet. Hinter dem Behältnis befinden sich die bereits in Fig. 3 beschriebenen Strahlungsdetektoreinrichtungen 14, 16, 18, die jeweils den einzelnen Strahlungseinrichtungen 11,12,13 zugeordnet sind. Es könnte jedoch auch eine durchgehende Strahlungsdetektoreinrichtung Anwendung finden. Anstelle der in Fig. 4 gezeigten Anordnung wäre es auch möglich, ein Spektrometer zur Untersuchung der Infrarot-Absorption vorzusehen.

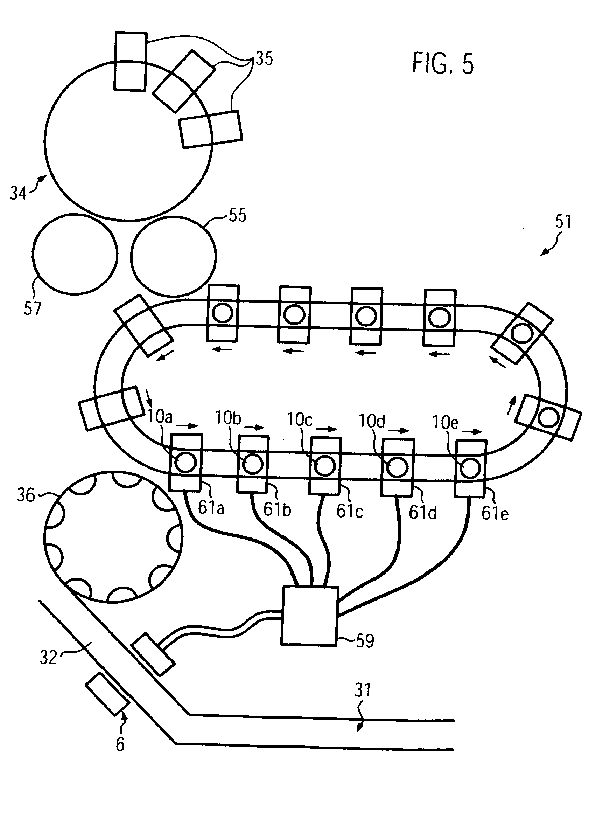

Fig. 5 zeigt eine weitere Ausführungsform einer erfindungsgemäßen Vorrichtung 51 zum Herstellen von Kunststoffbehältnissen gemäß der Erfindung. Elemente und Merkmale der Vorrichtung, die die gleichen Bezugszeichen wie schon in den Figuren 1 bis 4 tragen, werden nicht noch einmal im Detail beschrieben. Auf deren Beschreibung wird nach oben verwiesen.

Die Vorrichtung 51 umfasst eine Sortiereinrichtung 31 zur Ausrichtung der Vorformlinge 10 und eine Transporteinrichtung 32, über die die Vorformlinge 10 an einen Eintaktstem 36 übergeben werden. Daran anschließend durchlaufen die Vorformlinge eine Erwärmungseinheit, die im Vergleich zur in Figur 1 dargestellten Vorrichtung modifiziert ist. Daran schließt sich die Blaseinrichtung 34 mit seinem Einlaufstern 55 und den Behandlungsstationen 35 an. Dort werden die Vorformlinge 10 zu Behältnissen expandiert und dann über einen Auslaufstern 57 abtransportiert.

Wie auch schon in der Vorrichtung entsprechend der Figur 1 ist stromaufwärts der Erwärmungseinheit eine Infrarot-Absorptionsuntersuchungseinrichtung 6 vorgesehen, wie sie im Zusammenhang mit den Figuren 2 bis 4 schon im Detail beschrieben wurde. Diese Einrichtung 6 liefert charakteristische Werte für den Infrarot-Absorptionsgrad der Kunststoff-Vorformlinge 10, die an ihr vorbeilaufen.

In dieser Ausführungsform werden diese Werte an eine Steuereinheit 59 übermittelt. Bei der Steuereinheit kann es sich auch um eine Regeleinheit handeln, je nachdem wie die charakteristischen Werte eingesetzt werden. Die Steuereinheit 59 nutzt die ermittelten charakteristischen Werte um die Enrvärmungseinheit entsprechend der ermittelten Absorptionseigenschaften der Vorformlinge zu steuern. Dadurch kann direkt auf Änderungen der Materialeigenschaften reagiert werden.

Die Erwärmungseinheit dieser Ausführungsform weist mehrere individuelle Heizeinrichtungen 61a - 61 e auf. Diese sind so ausgebildet, dass sie jeweils einen Vorformling 10a - 10e aufnehmen können und diesen individuell erwärmen. Bis zur Übergabe an die als Behandlungsstation ausgebildete Blaseinrichtung 34 werden die Vorformlinge 10, 10a-10e dann auf die gewünschte Temperatur gebracht. Die individuellen Heizeinrichtungen 61a - 61 e laufen folglich mit den Vorformlingen mit (angedeutet durch die Pfeile in Figur 5). Individuelle Heizeinrichtungen 61a-61e haben dabei den Vorteil, dass sie aufgrund ihres kleinen Volumens schnell an geänderte Parameter angepasst werden können.

Die einzelnen Heizeinrichtungen 61a - 61e stehen mit der Steuereinheit 59 in Verbindung (gezeigt nur für 61a-61e, aber für alle vorhanden). Damit kann die Steuereinheit 59 die Heinzeinrichtungen 61a - 61e in Abhängigkeit von den ermittelten charakteristischen Werten bzgl. der IR-Absorption für jeden Vorformling 10a-10e individuell steuern. Somit kann beim Steuern bzw. Regeln der Heizeinrichtungen auf die IR-Absorptionsfähigkeit des Materials Rücksicht genommen werden.

Alternativ zur Verwendung der individuellen charakteristischen Werte ist es jedoch auch möglich einen für eine Gruppe festgestellten, beispielsweise gemittelten Wert zu verwenden.

Die individuellen Heizeinrichtungen 61 a-61 e sind bevorzugt als Mikrowellenheizungen oder IR-Heizungen ausgebildet. Diese reagieren ausreichend schnell auf Parameteränderungen.

Wie auch in der Figur 1, kann natürlich auch in dieser Ausführungsform eine Ausschleuseinrichtung, mit der einzelne, insbesondere schadhafte Vorformlinge aus dem Herstellungsprozess genommen werden können, vorgesehen sein.

In Figur 5 ist die Untersuchungseinrichtung 6 Teil der Vorrichtung selbst. Natürlich ist es ebenso denkbar, die charakteristischen Werte der IR- Absorption in einer eigenen unabhängigen Vorrichtung zu bestimmen. In diesem Fall müsste dann eine Identifizierung der Vorformlinge in der Vorrichtung 51 stattfinden, über die einem Vorformling der zugehörige charakteristischer Wert eindeutig zugeordnet werden kann. Dies kann beispielsweise über aufgedruckte Barcodes oder RFID Chips geschehen. Die entsprechenden Werte können dann einer Datenbank entnommen werden.

Insgesamt lässt sich somit in der Vorrichtung 51 individuell von Vorformling zu Vorformling die Heizleistung an sich ändernde Materialeigenschaften anpassen. Dies bewirkt eine Verbesserung des Durchsatzes der Maschine.

Mit der Vorrichtung 51 werden Behältnisse wie folgt hergestellt. Über die Sortiereinrichtung 31 und die Transporteinrichtung 32 werden die Vorformlinge nach und nach an der Untersuchungseinrichtung 6 vorbeigeführt. Dort wird für jeden Vorformling 10, 10a-10e mindestens ein für die IR-Absorption charakteristischer Wert ermittelt, der/die dann an die Steuereinheit 59 weitergegeben wird/werden.

Daran anschließend durchlaufen die Vorformlinge 10, 10a-10e die Erwärmungseinheit, wobei jeder Vorformling in einer eigenen mitlaufenden Heizeinrichtung 61a-61e, etc. beispielsweise über Mikrowellen- oder IR-Strahlung erwärmt wird. Die Erwärmung der einzelnen Heizeinrichtungen wird von der Steuereinheit 59 gesteuert, bzw. geregelt. Dabei wird der ermittelte charakteristische Wert berücksichtigt. Somit wird für jeden Vorformling ein an sein IR-Absorptionsverhalten angepasstes Aufwärmen durchgeführt, womit schwankende Materialzusammensetzungen beispielsweise aufgrund des verwendeten Recyclinggemischs berücksichtigt werden können.

Danach werden die aufgeheizten Vorformlinge in der Blaseinrichtung 34 zu den endgültigen Behältnissen expandiert und können über den Auslaufstern 57 abtransportiert werden.

## Patentansprüche

1. Verfahren zum Herstellen von Kunststoffbehältnissen, mittels Vorformlingen (10) aus Kunststoffmaterial, wobei an wenigstens einem Bereich des Kunststoffs der Infrarot-Absorptionsgrad ermittelt wird und nachfolgend ein für diesen Infrarot-Absorptionsgrad charakteristischer Wert bei der Herstellung der Behältnisse genutzt wird,
**dadurch gekennzeichnet, dass**
bei der Herstellung der Kunststoff-Vorformlinge dem Kunststoffmaterial Infrarot-Absorptionsmaterial beigefügt wird und die Menge des beigefügten Infrarot-Absorptionsmaterials in Abhängigkeit von dem für den Infrarot-Absorptionsgrad charakteristischen Wert geregelt oder gesteuert wird.

2. Verfahren nach Anspruch 1, **dadurch gekennzeichnet, dass** der Infrarot-Absorptionsgrad an den aus dem Kunststoffmaterial gefertigten Vorformlingen (10) bestimmt wird.

3. Verfahren nach Anspruch 1 oder 2, **dadurch gekennzeichnet, dass** die Vorformlinge (10) in einem Spritzguss- oder Schmelzkompressionsvorgang hergestellt werden.

4. Verfahren nach einem der Ansprüche 1 bis 3, **dadurch gekennzeichnet, dass** die Vorformlinge (10) mittels einer Heizeinrichtung erwärmt werden und die erwärmten Vorformlinge (10) zu den Kunststoffbehältnissen expandiert werden.

5. Verfahren nach Anspruch 4, **dadurch gekennzeichnet, dass** der Infrarot-Absorptionsgrad während oder vor dem Expansionsschritt ermittelt wird.

6. Verfahren nach einem der Ansprüche 1 bis 5, **dadurch gekennzeichnet, dass** der charakteristische Wert eine Erwärmung der Vorformlinge (10) beeinflusst, insbesondere regelt oder steuert.

7. Verfahren nach einem der Ansprüche 1 bis 6, **dadurch gekennzeichnet, dass** der charakteristische Wert nach Herstellung der Vorformlinge (10) ein Sortieren der Vorformlinge (10) in eine Gruppe von Vorformlingen (10) mit ähnlichem Infrarot-Absorptionsgrad hervorruft oder ein Aussortieren zumindest eines Vorformlings (10) bedingt.

8. Verfahren nach einem der Ansprüche 1 bis 7, **dadurch gekennzeichnet, dass** der charakteristische Wert ein individuelles Erwärmen jedes Vorformlings (10) regelt oder steuert.

9. Verfahren nach einem der Ansprüche 1 bis 8, **dadurch gekennzeichnet, dass** der ermittelte charakteristische Wert mit einem abgespeicherten Wert zur Beeinflussung des Verfahrens verglichen wird.

10. Vorrichtung (30) zum Herstellen einer Vielzahl von Kunststoffbehältnissen, mittels Vorformlingen (10) aus Kunststoffmaterial, wobei die Vorrichtung (30) eine Infrarot-Absorptionsuntersuchungsvorrichtung (6) aufweist, mit der ein Infrarot-Absorptionsgrad wenigstens eines Teils des Kunststoffs bestimmbar ist,
**dadurch gekennzeichnet, dass**
die Vorrichtung derart ausgebildet ist, dass bei der Herstellung der Kunststoff-Vorformlinge dem Kunststoffmaterial Infrarot-Absorptionsmaterial beigefügt wird und die Menge des beigefügten Infrarot-Absorptionsmaterials in Abhängigkeit von einem für den Infrarot-Absorptionsgrad charakteristischer Wert geregelt oder gesteuert wird.

11. Vorrichtung (30) nach Anspruch 10, **dadurch gekennzeichnet, dass** durch die Infrarot-Absorptionsuntersuchungseinrichtung (6) mittels Nutzung von Durchlicht und/oder ortsaufgelöst arbeitend der Infrarot-Absorptionsgrad eines Vorformlings (10) bestimmbar ist.

12. Vorrichtung (30) nach Anspruch 11, **dadurch gekennzeichnet, dass** die Infrarot-Absorptionsuntersuchungseinrichtung (6) zur Ausstrahlung von Licht im Wellenlängenbereich von 800 nm bis 1200 nm und 1200 nm bis 1500 nm und/oder 2000 nm bis 3000 nm und 3000 nm bis 7000 nm ausgebildet ist, insbesondere zur Ausstrahlung von Infrarotlicht.

13. Vorrichtung (30) nach einem der Ansprüche 11 bis 12, **dadurch gekennzeichnet, dass** eine Erwärmungseinheit (33) und eine stromabwärts davon angeordnete Expandierungsvorrichtung (34) zum Fertigen der Kunststoffbehältnisse aus den Vorformlingen (10) enthalten ist.

14. Vorrichtung (30) nach Anspruch 13, **dadurch gekennzeichnet, dass** die Erwärmungseinheit (33) durch den ermittelten Infrarot-Absorptionsgrad individuell bezüglich ihrer Heizleistung beeinflussbare, insbesondere steuerbare Heizeinrichtungen (61 a,61b,61c,61d,61e) aufweist.

## Claims

1. A method of manufacturing plastic containers by means of preforms (10) made of plastic material, wherein the infrared absorption degree is determined in at least one area of the plastic and wherein, subsequently, a value which is characteristic of this infrared absorption degree is used for producing the containers,
**characterized in that**
infrared absorption material is added to the plastic material when manufacturing the plastic performs and the amount of added infrared absorption material is controlled in a closed loop or an open loop depending on the value which is characteristic of the infrared absorption degree.

2. A method according to claim 1, **characterized in that** the infrared absorption degree is determined at the preforms (10) made from said plastic material.

3. A method according to claim 1 or 2, **characterized in that** the preforms (10) are produced in an injection moulding or melt compression process.

4. A method according to one of the claims 1 to 3, **characterized in that** the preforms (10) are heated by means of a heating unit and that the heated preforms (10) are expanded into the plastic containers.

5. A method according to claim 4, **characterized in that** the infrared absorption degree is determined during or prior to the expansion step.

6. A method according to one of the claims 1 to 5, **characterized in that** the characteristic value influences, especially controls in a closed loop or an open loop, a heating of the preforms (10).

7. A method according to one of the claims 1 to 6, **characterized in that** the characteristic value after the production of the preforms (10) causes sorting of the preforms (10) into a group of preforms (10) having a similar infrared absorption degree or has the effect that at least one preform (10) is sorted out.

8. A method according to one of the claims 1 to 7, **characterized in that** the characteristic value controls in a closed loop or an open loop the individual heating of each preform (10).

9. A method according to one of the claims 1 to 8, **characterized in that** the characteristic value ascertained is compared with a stored value for influencing the process.

10. An apparatus (30) for manufacturing a plurality of plastic containers by means of preforms (10) made of plastic material, wherein the apparatus (30) comprises an infrared absorption examination unit (6) by means of which an infrared absorption degree of at least one part of the plastic is determinable,
**characterized in that**
the apparatus is implemented such that infrared absorption material is added to the plastic material when manufacturing the plastic performs and the amount of added infrared absorption material is controlled in a closed loop or an open loop depending on a value which is characteristic of the infrared absorption degree.

11. An apparatus (30) according to claim 10, **characterized in that** the infrared absorption degree of a preform (10) is determinable by the infrared absorption examination unit (6) by making use of transmitted light and/or by working in a spatially resolved manner.

12. An apparatus (30) according to claim 11, **characterized in that** the infrared absorption examination unit (6) is implemented for emitting light in wavelength ranges of 800 nm to 1200 nm and 1200 nm to 1500 nm and/or 2000 nm to 3000 nm and 3000 nm to 7000 nm, in particular for emitting infrared light.

13. An apparatus (30) according to one of the claims 11 to 12, **characterized in that** the apparatus comprises a heating unit (33) and an expansion device (34) arranged downstream of said heating unit (33) and used for producing the plastic containers from said preforms (10).

14. An apparatus (30) according to claim 13, **characterized in that** the heating unit (33) comprises heating means (61a, 61 b, 61 c, 61d, 61e) which are adapted to be individually influenced with respect to their heating power by the infrared absorption degree ascertained, said heating means (61 a, 61 b, 61 c, 61 d, 61 e) being in particular controllable heating means.

## Revendications

1. Procédé de fabrication de récipients ou contenants en matière plastique, au moyen de préformes (10) en une matière plastique, procédé d'après lequel on détermine au niveau d'au moins une zone de la matière plastique, le degré d'absorption des infrarouges et l'on utilise ensuite une valeur caractéristique pour ce degré d'absorption des infrarouges, lors de la fabrication des récipients,
**caractérisé en ce que**
lors de la fabrication des préformes en matière plastique, on additionne à la matière plastique, du matériau d'absorption des infrarouges, et on régule ou commande la quantité du matériau d'absorption des infrarouges additionné, en fonction de la valeur caractéristique pour le degré d'absorption des infrarouges.

2. Procédé selon la revendication 1, **caractérisé en ce que** l'on détermine le degré d'absorption des infrarouges sur les préformes (10) fabriquées à partir de la matière plastique.

3. Procédé selon la revendication 1 ou la revendication 2, **caractérisé en ce que** les préformes (10) sont fabriquées au cours d'une opération de moulage par injection ou de fusion-compression.

4. Procédé selon l'une des revendications 1 à 3, **caractérisé en ce que** l'on échauffe les préformes (10) au moyen d'un dispositif de chauffage, et les préformes (10) échauffées subissent ensuite une expansion pour les transformer en les récipients ou contenants en matière plastique.

5. Procédé selon la revendication 4, **caractérisé en ce que** le degré d'absorption des infrarouges est déterminé pendant ou avant l'étape d'expansion.

6. Procédé selon l'une des revendications 1 à 5, **caractérisé en ce que** la valeur caractéristique influence, notamment régule ou commande, un échauffement des préformes (10).

7. Procédé selon l'une des revendications 1 à 6, **caractérisé en ce que** la valeur caractéristique, après la fabrication des préformes (10), engendre un tri des préformes (10) en un groupe de préformes (10) avec un degré d'absorption des infrarouges similaire, ou entraîne une séparation par tri d'au moins une préforme (10).

8. Procédé selon l'une des revendications 1 à 7, **caractérisé en ce que** la valeur caractéristique régule ou commande un échauffement individuel de chaque préforme (10).

9. Procédé selon l'une des revendications 1 à 8, **caractérisé en ce que** la valeur caractéristique déterminée est comparée à une valeur mémorisée, pour influencer le procédé.

10. Installation (30) pour la fabrication d'une pluralité de récipients ou contenants en matière plastique, au moyen de préformes (10) en matière plastique, l'installation (30) présentant un dispositif d'analyse d'absorption des infrarouges (6), à l'aide duquel il est possible de déterminer un degré d'absorption des infrarouges d'au moins une partie de la matière plastique,
**caractérisée en ce que** l'installation est conçue de manière à ce que lors de la fabrication de préformes en matière plastique, du matériau d'absorption des infrarouges est additionné à la matière plastique, et la quantité du matériau d'absorption des infrarouges additionné, est régulée ou commandée en fonction d'une valeur caractéristique pour le degré d'absorption des infrarouges.

11. Installation (30) selon la revendication 10, **caractérisée en ce que** le dispositif d'analyse d'absorption des infrarouges (6) est en mesure de déterminer le degré d'absorption des infrarouges d'une préforme (10), moyennant l'utilisation de la lumière transmise et/ou en effectuant un traitement en résolution spatiale.

12. Installation (30) selon la revendication 11, **caractérisée en ce que** le dispositif d'analyse d'absorption des infrarouges (6) est conçu pour émettre un rayonnement lumineux dans la plage de longueur d'onde de 800 nm à 1200 nm et de 1200 à 1500 nm, et/ou de 2000 à 3000 nm et de 3000 nm à 7000 nm, notamment pour émettre un rayonnement lumineux infrarouge.

13. Installation (30) selon l'une des revendications 11 à 12, **caractérisée en ce qu'**elle comprend une unité de chauffage (33) et un dispositif d'expansion (34) placé en aval de celle-ci, pour la fabrication des récipients ou contenants en matière plastique à partir des préformes (10).

14. Installation (30) selon la revendication 13, **caractérisée en ce que** l'unité de chauffage (33) comprend des dispositifs de chauffage (61a, 61b, 61c, 61d, 61e) susceptibles d'être influencés, notamment commandés individuellement concernant leur puissance de chauffe, par le degré d'absorption des infrarouges ayant été déterminé.
